# EUROPEAN PATENT SPECIFICATION

(11) **EP 1 909 450 B1**
(45) Date of publication and mention of the grant of the patent: **21.07.2010**
(21) Application number: 06020742.0
(22) Date of filing: 02.10.2006
(51) Int. Cl.: H04L 29/06, H04L 12/56

(54) **Method to route a network initiated message in a complex network using Radius protocol**
Verfahren zur Weglenkung einer netzwerkinitiierten Nachricht mit Hilfe des Radius Protokolls
Procédé pour router un message initié par le réseau utilisant le protocol Radius

(43) Date of publication of application: 09.04.2008
(73) Proprietor: Nokia Siemens Networks GmbH & Co. KG, 81541 München (DE)
(72) Inventor: Brand, Bernd, 81475 München (DE)

(56) References cited:
- CHIBA G DOMMETY M EKLUND CISCO SYSTEMS M ET AL: "Dynamic Authorization Extensions to Remote Authentication Dial In User Service (RADIUS)" IETF STANDARD, INTERNET ENGINEERING TASK FORCE, IETF, CH, July 2003 (2003-07), XP015009358 ISSN: 0000-0003

## Description

The invention relates to a method to route a network initiated message in a complex network using Remote Authentication Dial In User Service (RADIUS) protocol for authentication, authorization and accounting (AAA) including dynamic change procedures to a serving node (NAS), wherein said complex network comprises at least one Access Service Network (ASN) accommodating the serving node and at least one Connectivity Service Network (CSN) connecting a Home AAA Server (H-AAA) and the ASN.

[IETF Standard, Internet Engineering Task Force: "Dynamic Authorization Extensions to Remote Authentication Dial In User Service (RADIUS)", RFC 3576, July 2003] relates to an extension to the Remote Authentication Dial In User Service (RADIUS) protocol, allowing dynamic changes to a user session, as implemented by network access server products. This includes support for disconnecting users and changing authorizations applicable to a user session.

Subscribers of an operator gain access to a network at an access node like e.g. via an Access Service Network (ASN) Gateway (GW) or a broadband remote access server (BRAS) and will authenticate with the authentication, authorization and accounting (AAA) server of their operator. In the following the AAA Server of the operator is called Home-AAA (H-AAA). One or more intermediate networks and/or nodes may be deployed as concentrator nodes depending on network topology, network domains, networks operated by different owners having interoperation agreements and business relations.

From the nature of usage that is that a user requests to login or to logoff, the requests initiate at the user and flow towards the H-AAA. Responses are sent back the same path. However, unsolicited requests initiated form the network, like e.g. to terminate a user session or to change authorization belonging to a session according to Remote Authentication Dial In User Service (RADIUS) dynamic change procedures, as defined in RFC 3576, need to find the path towards the access node currently serving the subscriber. Delivery of unsolicited requests is possible since the serving node is reported in RADIUS requests, e.g. in attribute Network Access Server (NAS) Internet Protocol (IP) address, but requires direct communication relation between H-AAA and each potential access node.

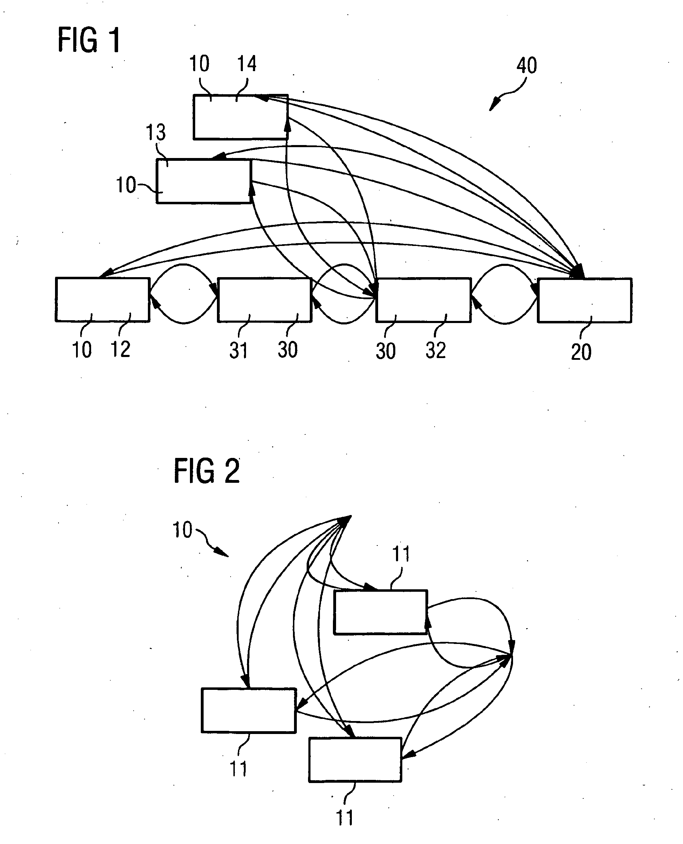

Potential network configuration and communication paths are shown in Fig. 1 and 2. Thereby Fig. 1 and 2 show an example applied to a Worldwide Interoperability for Microwave Access (WiMAX) network. It is important to mention that the example is not limited to WIMAX. Thereby each ASN 10 may contain several ASN GWs 11 (Fig. 2).

According to the state of the art, a direct communication path between a H-AAA 20 and each potential serving ASN 10 would have to be established and configured as shown in Fig. 1. This is difficult to administer already in case where a Connectivity Service Network (CSN) 30 and the ASN 10 are owned by the same operator due to the high number of potential ASNs 10 and/or ASN GWs 11.

Often the situation is as within a complex network 40 shown in Fig. 1. An ASN 10, like e.g. the ASN 12 an actual serving node is accommodated in, a Vendor ASN (V-ASN) 13, or a Home ASN (H-ASN) 14, has another operator than a CSN 30 that lies between the H-AAA 20 and the ASN 10, like e.g. a Vendor CSN (V-CSN) 31 or a Home CSN (H-CSN) 32.

In case where the ASN 12, 13, 14 is operated by a different operator than the CSN 31, 32, the ASN network configuration has to be made available to Home CSN (H-CSN) 32 operator and configuration has to be kept aligned. This is nearly impossible to maintain in independently administered networks.

Alternatively, each intermediate node has to keep and maintain session information of each active subscriber in order to forward requests towards the serving access node.

An object of the invention is to develop a method to route a network initiated message in a complex network using RADIUS protocol for authentication, authorization and accounting including dynamic change procedures to a serving node, without keeping and maintaining session information of each active subscriber within each intermediate RADIUS or proxy node.

The object of the invention is met by said method according to claim 1.

According to the invention, said method to route an unsolicited, i.e. network initiated message in a complex network using RADIUS protocol for authentication, authorization and accounting including dynamic change procedures to a serving node, wherein said complex network comprises at least one ASN accommodating the serving node and at least one CSN connecting a H-AAA and the ASN, is characterized by using a RADIUS communication path which was used for a request, like e.g. an Accounting-START request, from a serving node, that can be e.g. a Network Access Server (NAS) within an ASN to a H-AAA in the reverse direction for routing an unsolicited, i.e. network initiated message to said serving node.

The serving node, like e.g. the serving NAS, to which a network initiated message is to be addressed, is always identified in the accounting request, e.g. by the attribute NAS-IP-address or NAS-Identifier. By using a RADIUS communication path which was used for a request, like e.g. an Accounting-START request, from a serving node within an ASN to a H-AAA in the reverse direction, the method according to the invention allows to route network initiated messages, like e.g. a request to terminate a user session, to the serving node within the ASN without keeping route information in intermediate nodes located in the ASN and/or the CSN along the RADIUS communication path. This is particularly advantageous in case of a fixed accounting anchor. The serving node may be e.g. a NAS that is a single point of access to a remote resource.

The method according to the invention defines a way to send messages like e.g. RADIUS dynamic change requests to the serving node within the ASN without configuring all direct RADIUS communication paths between the H-AAA and all ASN entities. This is done by leveraging a current RADIUS communication path that was used for a request, like e.g. an Acct-START request, from the serving node within the ASN to the H-AAA in a reverse direction.

An advantage of the method according to the invention is that it reduces redundancy complexity for intermediate proxy nodes to a minimum but still allows continuing operation even after recovery. Intermediate nodes between the serving ASN and the H-AAA can be stateless in the sense that critical user session data need not to be stored when certain rules on attribute values are followed enabling to forward a RADIUS message of a user towards the serving ASN. A stateless handling is beneficial for RADIUS Proxy, like e.g. V-CSN, H-CSN and CSNG-C, especially after a recovery action of RADIUS Proxy to disconnect users that might not be listed any more as active users.

According to a preferred embodiment of said method according to the invention, a RADIUS communication path information that preferably comprises a hop-by-hop sequence of all intermediate proxy or RADIUS nodes along the RADIUS communication path is transferred into the request that is send from the serving node towards the H-AAA in order to use a RADIUS communication path which was used for a request from a serving node to the H-AAA in the reverse direction, wherein the same RADIUS communication path information is transferred in a network initiated message which is send towards the serving node, e.g. the serving NAS. Providing a RADIUS communication path information is an adequate way to use the RADIUS path in the reverse direction for a network initiated message since such an information can easily be taken and transferred into said network initiated message.

According to another preferred embodiment of the invention, the RADIUS communication path information that is transferred into the request that is send from the serving node towards the H-AAA is stored in the H-AAA for later use, particularly for transferring it in a network initiated message which is send towards the serving node at a later point in time. Storing said information allows using it at any time. Storing it at the H-AAA allows recover it easily.

According to a particularly preferred embodiment of the invention, additionally to the RADIUS communication path, information about the serving node, e.g. information about the NAS that is identified e.g. by the NAS-IP-Address and/or the NAS-Identifier, is stored in the H-AAA for later use. Doing so allows easily and exactly identifying the serving node in order to route a network initiated message towards said serving node. Thereby it is thinkable that information about the serving node is also comprised in the RADIUS communication path information.

According to another particularly preferred embodiment of the invention it is foreseen, that in order to use the RADIUS communication path information for a network initiated message to be sent to a serving node in the reverse direction, the RADIUS communication path information comprises a hop-by-hop sequence of RADIUS nodes along the RADIUS communication path, said RADIUS communication path information is attached to said message and said attached RADIUS communication path information is used in the reverse order. A hop-by-hop sequence has the advantage that the nodes along the RADIUS communication path can easily generate it and that it can easily be used in the reverse direction for a network initiated message.

In order to comprise the hop-by-hop sequence of RADIUS nodes along the RADIUS communication path within the RADIUS communication path information, according to a preferred embodiment of the invention each RADIUS node via which the request from the serving node is sent towards the H-AAA appends information about the previous RADIUS node to the sequence. The RADIUS communication path information contains the exact sequence of RADIUS nodes hop-by-hop from the serving NAS towards the H-AAA since each RADIUS node appends information about the previous RADIUS node to the sequence. Additionally, the attribute containing the identifier of the serving node or NAS, e.g. the NAS-IP-Address and/or the NAS-Identifier, is replaced by its own identity.

According to a preferred embodiment of the invention it is foreseen that when routing a network initiated message towards the serving node each RADIUS node along the reverse RADIUS communication path analyses the received RADIUS communication path information, removes the last RADIUS node from the sequence and forwards the network initiated message to the removed RADIUS node. For an unsolicited request, i.e. a network initiated message, the stored RADIUS communication path information that comprises the hop-by-hop sequence of RADIUS nodes along the RADIUS communication path is attached to the request and used in the reverse order. Each RADIUS node analyses the received communication path information, removes the last RADIUS node from the sequence and forwards the unsolicited request to the removed RADIUS node. Doing so is an easy and applicable way to use the RADIUS communication path information in the reverse order.

According to a preferred embodiment of the invention, the RADIUS communication path information is comprised in a vendor specific RADIUS attribute within the request that is sent from the serving node to the H-AAA and/or within the network initiated message that is sent towards the serving node in the reverse direction of the RADIUS communication path.

According to another preferred embodiment of the invention, the RADIUS communication path information is comprised in an already available RADIUS attribute which is anyway send in the network initiated message, e.g. in the RADIUS attribute accounting-session-ID.

According to a particularly preferred embodiment of the invention, for each user session an unique identifier, e.g. an acct-session-id, a framed-IP-address, a username or the like is used.

According to another particularly preferred embodiment of the invention, the request the RADIUS communication path was used for is an Accounting-START request from a serving node within an ASN to a H-AAA.

It is important to mention that the above mentioned method according to the invention, its preferred embodiments and combinations hereof have the following advantages over the state of the art:
- a less complex operator network architecture which leads to reduced operation expenses;
- a less complex software architecture of involved network nodes;
- reduced efforts for system development and testing;
- reduced memory occupancy of involved network nodes.

While the present invention has been described in detail, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present invention.

The foregoing, together with other objects, features, and advantages of this invention can be better appreciated with reference to the following specification, claims and drawings. Thereby showing:
- Fig. 1: a scheme of a complex network configuration with related RADIUS communication paths;
- Fig. 2: a scheme of RADIUS Network configurations within an ASN;
- Fig. 3: a flowchart of a method according to the invention;
- Fig. 4: a table with RADIUS Accounting-Session-ID values changed by different nodes.

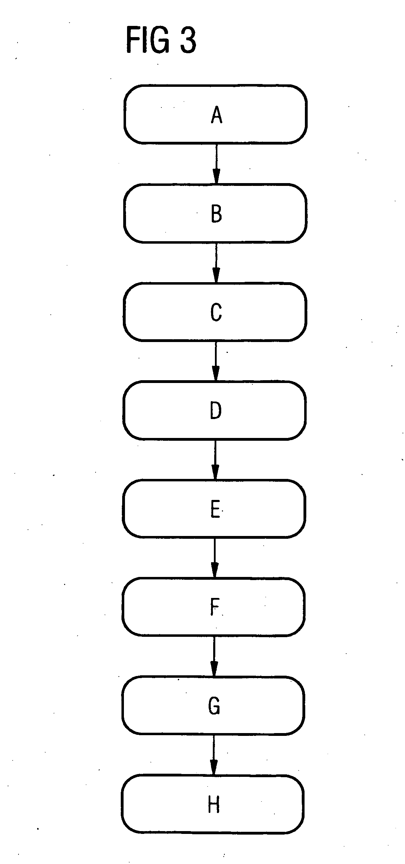

Fig. 3 shows a flowchart of a method to route an unsolicited, i.e. network initiated message in a complex network using RADIUS protocol for authentication, authorization and accounting including dynamic change procedures to a serving node. Said complex network comprises at least one ASN 10, 12, 13, 14 (Fig. 1 and 2) accommodating the serving node and at least one CSN 30, 31, 32 (Fig. 1) connecting a H-AAA 20 and the ASN 10, 12, 13, 14. The method according to the invention uses a RADIUS communication path that was used for an Accounting-START request from the serving node within the ASN 10, 12, 13, 14 to the H-AAA 20 in the reverse direction for routing an unsolicited, i.e. network initiated message to said serving node.

To do so, in a fist step A (Fig. 3) a RADIUS communication path information is transferred into the Accounting-START request which is sent from a serving node that is a NAS towards the H-AAA.

The RADIUS communication path information comprises an exact hop-by-hop sequence of the intermediate RADIUS nodes along the RADIUS communication path between the NAS and the H-AAA, since in a second step B each intermediate RADIUS node appends information about the previous RADIUS node to the sequence. Additionally the attribute comprising the identifier of the serving NAS that might be the NAS-IP-Address or the NAS Identifier is replaced by its own identity.

In a third step C the RADIUS communication path information comprising that hop-by-hop sequence is stored in the H-AAA for later use.

Furthermore, in a fourth step D information about the serving NAS is also stored in the H-AAA. The NAS is always identified in the Accounting-START request e.g. by the attribute NAS-IP-Address or NAS-Identifier.

In a fifth step E the RADIUS communication path information is attached to a network initiated message in order to route said network initiated message to the serving NAS along the RADIUS communication path but in the reverse direction.

In a sixth step F the network initiated message is sent to the last intermediate RADIUS node the original Accounting-START request passed before reaching the H-AAA.

In a seventh step G each intermediate RADIUS node along the reversed RADIUS communication path beginning at the H-AAA and ending at the serving NAS then analyses the received communication path information, removes the last intermediate RADIUS node from the hop-by-hop sequence comprised in said information and forwards the network initiated message to the removed RADIUS node until in an eighth step H the network initiated message reaches the serving NAS.

Thereby it is thinkable that the RADIUS communication path information is comprised in a vendor specific RADIUS attribute or is combined in an already available RADIUS attribute which is anyway send in the network initiated message, like e.g. in the RADIUS attribute accounting-session-ID.

Preferably for each user session a unique identifier, e.g. an acct-session-id, a framed-IP-address, a username or the like is used.

The described method according to the invention has the following advantages over the state of the art:
- a less complex operator network architecture which leads to reduced operation expenses;
- a less complex software architecture of involved network nodes;
- reduced efforts for system development and testing;
- reduced memory occupancy of involved network nodes.

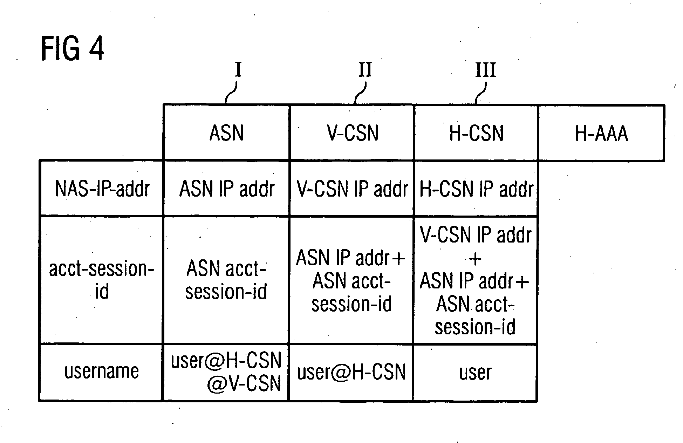

With reference to Fig. 4 a method according to the invention is described in detail for a use case of an attribute Act-Session-ID in the following. The same principle can be applied to a dedicated RADIUS attribute which consists of the RADIUS node sequence.

A WIMAX network configuration is used as example wherein it is important to mention that the method is not limited to WIMAX. The RADIUS Disconnect request according to RFC 3578 is used as an example of an unsolicited RADIUS request, i.e. a network initiated message.

The following assumptions are made:
- The RADIUS communication path is configured from the serving NAS within an ASN towards a H-CSN and the H-AAA for RADIUS AA and Accounting messages. Thereby port 1812 is used for RADIUS Access Request/Accept, and port 1813 for Accounting Request/Response.
- The H-AAA will send the unsolicited RADIUS request to the indicated NAS-IP-address contained in the Accounting-START request. The unique identification of the user session, e.g. the acct-session-Id, and the communication path information are essential part of the unsolicited RADIUS request. Both essential parts may be combined into one RADIUS attribute. Additional attributes like framed-IP-address or username may be added.
- It is assumed that the user will always be served by the same NAS, meaning that the accounting anchor remains in the same NAS Instance, i.e. the same ASN GW that does not exclude user mobility. Mobility is dealt within the ASN.
- The Accounting-Session-ID and the NAS-IP-Address are Involved and have to obtain a certain treatment to enable a stateless behavior during network initiated disconnect handling, like e.g. no more quota handling.
- The Accounting-Session-ID is a unique identifier in the NAS for a user session. The format Accounting-Session-ID = <IP address> + <unique id> is not mandatory but deployed in this scenario.
- H-AAA, H-CSN and V-CSN need to know the RADIUS IP address to whom to send the Disconnect Request of a user to. NAS-IP-Address supplied in RADIUS messages indicates where the user session is currently maintained. Therefore, the IP Address contained in the attribute NAS-IP Address of the Accounting-START request message is used as RADIUS destination address.
- In CSN, the format of Accounting-Session-ID is composed of all information necessary to disconnect a user session. Intermediate nodes will translate the different attribute formats in Accounting-START request and Disconnect request messages.
- The Acct-Session-ID is neither assigned nor contained in Access Request that would require additional limitations on NAS-IP-address behavior.
- The Acct-Session-Id has to be equal in Accounting START and Accounting STOP request.
- The attribute username, i.e. the Network Access Identifier (NAI), is used for routing purposes towards the H-AAA and must be contained in Accounting requests.
- The attribute Accounting-Session-ID or the dedicated vendor specific attribute containing the path information is used for routing purposes towards the serving ASN and must be contained in Disconnect requests.

In the following as depicted in column I of the table shown in Fig. 4, the serving ASN behavior for RADIUS attributes is described under the above mentioned assumptions:
- The serving ASN behaves as NAS and runs the RADIUS protocol for Access Authorization (AA) and Accounting as client and for dynamic change procedures as server that includes RADIUS Disconnect request message handling.
- Accounting Start message is issued by the serving ASN upon user login before actually forwarding user traffic to CSN containing a unique user session Identifier of ASN (Acct-Session-ID) and the identifier of the ASN, like e.g. the NAS-IP-address, which is also the destination address the RADIUS Disconnect request is send to. The disconnect request includes a unique identifier of the user session, like e.g. the acct-session-id or the username or the framed-IP-Address of the user.
- The acct-session-id is provided in RADIUS Acct START request toward H-CSN. The length is x octets. The Acct-Session-ID is unique in ASN but is related to NAS identification, e.g. the NAS-IP-Address.
- The attribute NAS-IP-Address defines the ASN which provided the unique session identifier and where the user session is maintained. The serving ASN remains the accounting anchor even if user moves into different coverage area. Thereby mobility and accounting is handled by the first serving ASN.
- For a network initiated release of the user session, a RADIUS Disconnect request containing the path information, the unique session identification, e.g. the Acct-Session-ID, and optionally the users IP-Address, also called framed-IP-Address, or a user ID, e.g. the username, has to be send according to RFC3576. Those values have been provided in the Accounting-START request by serving ASN towards H-CSN/H-AAA.
- The disconnect request may contain the framed-IP-Address or username instead of Acct-Session-ID.

In the following as depicted in column II and III of the table shown in Fig. 4, the CSN behavior concerning RADIUS attributes is described under the assumptions mentioned above:
- The CSN behaves as enhanced RADIUS proxy for AA and Accounting. CSN behaves as client as client for unsolicited RADIUS requests which Includes RADIUS Disconnect request message handling.
- The V-CSN and H-CSN Acct-Session-ID is structured as <dest IP of Disconnect req>+<received acct-session-id> from ASN: <received NAS-IP-addr> (4 octets)+
   <received acct-session-id> (x octets)
   allows to inform the serving ASN about forced logoff of session/user independent of stored session data. Thereby '+' means concatenation. The maximum length of attribute acct-session-id is 253 octets.
- When the RADIUS Accounting-START request is received the following treatment applies. This can be seen best in Fig. 4 where the content of the attribute acct-session-id changes from node to node:
   - the provided NAS-IP-address is added at the beginning to the received acct-session-id
   - the NAS-IP-address is replaced by the own address where the RADIUS disconnect request will be received for this session.
      Example: according to Fig. 4, at H-AAA the Acct-Session-ID contains:
         <received NAS-IP-addr of H-CSN>+
         <received NAS-IP-addr of V-CSN>+
         <received NAS-IP-addr of ASN>+
         <received acct-session-id of ASN> (x octets)
- The NAS-IP-address attribute format is considered to be 4 octets. If the NAS-IP-Address format is a character string, a delimiter is needed in Acct-Session-ID between each IP-Address.
- The framed-IP-Address contains the IP-Address assigned to the user. The attribute is received from ASN. The value is forwarded in each request.
- When the RADIUS Disconnect request is received in H-CSN (column III) or V-CSN (column II), the Acct-Session-ID is investigated and depending on involved RADIUS node a special behavior is applied:
   - The original NAS-IP-Address is extracted from the Acct-Session-ID (first 4 octets).
   - It is used ad destination of the Disconnect request
   - The Acct-Session-ID is reduced by that IP-Address and forwarded.
   - Additional attributes of Disconnect request are forwarded as provided.
- When the Acct-Session-ID is not available, e.g. if the Accounting-START request has not been received, the disconnect request may contain the framed-IP-address or username.

## Claims

1. Method to route a network initiated message in a complex network (40) using Remote Authentication Dial In User Service (RADIUS) protocol for authentication, authorization and accounting (AAA) including dynamic change procedures to a serving node, wherein said complex network (40) comprises at least one Access Service Network (ASN) (10, 12, 13, 14) accommodating the serving node and at least one Connectivity Service Network (CSN) (30, 31, 32) connecting a Home AAA Server (H-AAA) (20) and the ASN (10, 12, 13, 14),
**characterized by**
using a RADIUS communication path which was used for a request from a serving node to a H-AAA (20) in the reverse direction for routing a network initiated message to said serving node.

2. Method according to claim 1,
**characterized in**
**that** in order to use a RADIUS communication path which was used for a request from a serving node to a H-AAA (20) in the reverse direction, a RADIUS communication path information is transferred into the request that is send from the serving node towards the H-AAA (20), wherein the same RADIUS communication path information is transferred in a network initiated message which is send towards the serving node.

3. Method according to claim 2,
**characterized in**
**that** the RADIUS communication path information that is transferred into the request that is send from the serving node towards the H-AAA (20) is stored in the H-AAA (20) for later use.

4. Method according to claim 3,
**characterized in**
**that** additionally to the RADIUS communication path, information about the serving node is stored in the H-AAA (20) for later use.

5. Method according to claim 2, 3 or 4,
**characterized in**
**that** in order to use the RADIUS communication path information for a network initiated message in the reverse direction, the RADIUS communication path information comprises a hop-by-hop sequence of RADIUS nodes along the RADIUS communication path, said RADIUS communication path information is attached to said message and said attached RADIUS communication path information is used in the reverse order.

6. Method according to claim 5,
**characterized in**
**that** in order to comprise the hop-by-hop sequence of RADIUS nodes along the RADIUS communication path within the RADIUS communication path information, each RADIUS node via which the request from the serving node is sent towards the H-AAA (20) appends information about the previous RADIUS node to the sequence.

7. Method according to claim 5 or 6,
**characterized in**
**that** when routing a network initiated message towards the serving node each RADIUS node along the reverse RADIUS communication path analyses the received RADIUS communication path information, removes the last RADIUS node from the sequence and forwards the network initiated message to the removed RADIUS node.

8. Method according to claim 2 to 7,
**characterized in**
**that** the RADIUS communication path information is comprised in a vendor specific RADIUS attribute within the request that is sent from the serving node to the H-AAA (20) and/or within the network initiated message that is sent towards the serving node in the reverse direction of the RADIUS communication path.

9. Method according to claim 2 or 7,
**characterized in**
**that** the RADIUS communication path information is comprised in an already available RADIUS attribute which is anyway send in the network initiated message.

10. Method according to one of the previous claims,
**characterized in**
**that** for each user session, an unique identifier is used.

11. Method according to one of the previous claims,
**characterized in**
**that** the request the RADIUS communication path was used for is an Accounting-START request from a serving node to a H-AAA (20).

## Patentansprüche

1. Verfahren zum Routen einer netzwerkinitiierten Nachricht in einem komplexen Netzwerk (40) unter Verwendung des Protokolls Remote Authentication Dial In User Service (RADIUS) für Authentifizierung, Autorisierung und Abrechnung (AAA) einschließlich dynamischer Änderungsprozeduren zu einem versorgenden Knoten, wobei das komplexe Netzwerk (40) mindestens ein Access Service Network (ASN) (10, 12, 13, 14), worin der versorgende Knoten untergebracht ist, und mindestens ein Connectivity Service Network (CSN) (30, 31, 32), das einen Home AAA Server (H-AAA) (20) und das ASN (10, 12, 13, 14) verbindet, umfasst,
**gekennzeichnet durch**
Verwendung eines RADIUS-Kommunikationspfads, der für eine Anforderung von einem versorgenden Knoten an einen H-AAA (20) verwendet wurde, in der umgekehrten Richtung zum Routen einer netzwerkinitiierten Nachricht zu dem versorgenden Knoten.

2. Verfahren nach Anspruch 1,
**dadurch gekennzeichnet, dass**
um einen RADIUS-Kommunikationspfad, der für eine Anforderung von einem versorgenden Knoten an einen H-AAA (20) verwendet wurde, in der umgekehrten Richtung zu verwenden, eine RADIUS-Kommunikationspfad-Information in die Anforderung transferiert wird, die von dem versorgenden Knoten in Richtung des H-AAA (20) gesendet wird, wobei dieselbe RADIUS-Kommunikationspfad-Information in einer netzwerkinitiierten Nachricht transferiert wird, die in Richtung des versorgenden Knotens gesendet wird.

3. Verfahren nach Anspruch 2,
**dadurch gekennzeichnet, dass**
die RADIUS-Kommunikationspfad-Information, die in die Anforderung transferiert wird, die von dem versorgenden Knoten in Richtung des H-AAA (20) gesendet wird, zur späteren Verwendung in dem H-AAA (20) gespeichert wird.

4. Verfahren nach Anspruch 3,
**dadurch gekennzeichnet, dass**
zusätzlich zu dem RADIUS-Kommunikationspfad Informationen über den versorgenden Knoten zur späteren Verwendung in dem H-AAA (20) gespeichert werden.

5. Verfahren nach Anspruch 2, 3 oder 4,
**dadurch gekennzeichnet, dass**
um die RADIUS-Kommunikationspfad-Information für eine netzwerkinitiierte Nachricht in der umgekehrten Richtung zu verwenden, die RADIUS-Kommunikationspfad-Information eine Hop-weise Sequenz von RADIUS-Knoten auf dem RADIUS-Kommunikationspfad umfasst, wobei die RADIUS-Kommunikationspfad-Information an die Nachricht angefügt wird und die angefügte RADIUS-Kommunikationspfad-Information in der umgekehrten Reihenfolge verwendet wird.

6. Verfahren nach Anspruch 5,
**dadurch gekennzeichnet, dass**
um die Hop-weise Sequenz von RADIUS-Knoten auf dem RADIUS-Kommunikationspfad in der RADIUS-Kommunikationspfad-Information zu umfassen, jeder RADIUS-Knoten, über den die Anforderung von dem versorgenden Knoten in Richtung des H-AAA (20) gesendet wird, Informationen über den vorherigen RADIUS-Knoten an die Sequenz anhängt.

7. Verfahren nach Anspruch 5 oder 6,
**dadurch gekennzeichnet, dass**
beim Routen einer netzwerkinitiierten Nachricht in Richtung des versorgenden Knotens jeder RADIUS-Knoten auf dem umgekehrten RADIUS-Kommunikationspfad die empfangene RADIUS-Kommunikationspfad-Information analysiert, den letzten RADIUS-Knoten aus der Sequenz entfernt und die netzwerkinitiierte Nachricht zu dem entfernten RADIUS-Knoten weiterleitet.

8. Verfahren nach Anspruch 2 bis 7,
**dadurch gekennzeichnet, dass**
die RADIUS-Kommunikationspfad-Information in einem herstellerspezifischen RADIUS-Attribut in der Anforderung, die von dem versorgenden Knoten zu dem H-AAA (20) gesendet wird, und/oder in der netzwerkinitiierten Nachricht, die in Richtung des versorgenden Knotens in der umgekehrten Richtung des RADIUS-Kommunikationspfads gesendet wird, umfasst wird.

9. Verfahren nach Anspruch 2 oder 7,
**dadurch gekennzeichnet, dass**
die RADIUS-Kommunikationspfad-Information in einem bereits verfügbaren RADIUS-Attribut umfasst wird, das sowieso in der netzwerkinitiierten Nachricht gesendet wird.

10. Verfahren nach einem der vorhergehenden Ansprüche,
**dadurch gekennzeichnet, dass**
für jede Benutzersitzung eine einzigartige Kennung verwendet wird.

11. Verfahren nach einem der vorhergehenden Ansprüche,
**dadurch gekennzeichnet, dass**
die Anforderung, für die der RADIUS-Kommunikationspfad verwendet wurde, eine Accounting-START-Anforderung von einem versorgenden Knoten an einen H-AAA (20) ist.

## Revendications

1. Procédé pour router un message initié par le réseau dans un réseau complexe (40) utilisant le protocole RADIUS (service d'authentification distante d'utilisateur appelant) pour l'authentification, l'autorisation et la comptabilité (AAA), incluant des procédures de changement dynamique vers un noeud serveur, dans lequel ledit réseau complexe (40) comprend au moins un réseau de service d'accès (ASN) (10, 12, 13, 14) pourvu du noeud serveur et au moins un réseau de service de connectivité (CSN) (30, 31, 32) connectant un serveur AAA de rattachement (H-AAA) (20) et l'ASN (10, 12, 13, 14),
**caractérisé par**
l'utilisation d'un trajet de communication RADIUS qui a été utilisé pour une demande d'un noeud serveur à un H-AAA (20) dans la direction inverse pour router un message initié par le réseau vers ledit noeud serveur.

2. Procédé selon la revendication 1,
**caractérisé en ce**
**que**, pour utiliser un trajet de communication RADIUS qui a été utilisé pour une demande d'un noeud serveur à un H-AAA (20) dans la direction inverse, une information de trajet de communication RADIUS est transférée dans la demande qui est envoyée du noeud serveur au H-AAA (20), dans lequel la même information de trajet de communication RADIUS est transférée dans un message initié par le réseau qui est envoyé vers le noeud serveur.

3. Procédé selon la revendication 2,
**caractérisé en ce**
**que** l'information de trajet de communication RADIUS qui est transférée dans la demande qui est envoyée du noeud serveur au H-AAA (20) est stockée dans le H-AAA (20) pour une utilisation ultérieure.

4. Procédé selon la revendication 3,
**caractérisé en ce**
**que**, en plus du trajet de communication RADIUS, une information concernant le noeud serveur est stockée dans le H-AAA (20) pour une utilisation ultérieure.

5. Procédé selon la revendication 2, 3 ou 4,
**caractérisé en ce**
**que**, pour utiliser l'information de trajet de communication RADIUS pour un message initié par le réseau dans la direction inverse, l'information de trajet de communication RADIUS comprend une séquence saut par saut de noeuds RADIUS le long du trajet de communication RADIUS, ladite information de trajet de communication RADIUS est attachée audit message et ladite information de trajet de communication RADIUS attachée est utilisée dans l'ordre inverse.

6. Procédé selon la revendication 5,
**caractérisé en ce**
**que**, pour inclure la séquence saut par saut de noeuds RADIUS le long du trajet de communication RADIUS dans l'information de trajet de communication RADIUS, chaque noeud RADIUS par l'intermédiaire duquel la demande du noeud serveur est envoyée vers le H-AAA (20) attache à la séquence une information concernant le noeud RADIUS précédent.

7. Procédé selon la revendication 5 ou 6,
**caractérisé en ce**
**que**, lors du routage d'un message initié par le réseau vers le noeud serveur, chaque noeud RADIUS le long du trajet de communication RADIUS inverse analyse l'information de trajet de communication RADIUS reçue, supprime le dernier noeud RADIUS de la séquence et transmet le message initié par le réseau au noeud RADIUS supprimé.

8. Procédé selon les revendications 2 à 7,
**caractérisé en ce**
**que** l'information de trajet de communication RADIUS est incluse dans un attribut RADIUS spécifique d'un vendeur à l'intérieur de la demande qui est envoyée du noeud serveur au H-AAA (20) et/ou à l'intérieur du message initié par le réseau qui est envoyé vers le noeud serveur dans la direction inverse du trajet de communication RADIUS.

9. Procédé selon la revendication 2 ou 7,
**caractérisé en ce**
**que** l'information de trajet de communication RADIUS est incluse dans un attribut RADIUS déjà disponible qui est de toute façon envoyé dans le message initié par le réseau.

10. Procédé selon l'une quelconque des revendications précédentes,
**caractérisé en ce**
**que**, pour chaque session d'utilisateur, un identifiant unique est utilisé.

11. Procédé selon l'une quelconque des revendications précédentes,
**caractérisé en ce**
**que** la demande pour laquelle le trajet de communication RADIUS a été utilisé est une demande Début de comptabilité (*Accounting START*) d'un noeud serveur à un H-AAA (20).
